# EUROPEAN PATENT SPECIFICATION

(11) **EP 1 220 746 B1**
(45) Date of publication and mention of the grant of the patent: **14.05.2003**
(21) Application number: 00969116.3
(22) Date of filing: 12.10.2000
(51) Int. Cl.: B29C 63/02, B29C 44/14, B60N 2/72

(54) **A MOLD TOOL AND METHOD FOR FORMING A TRIM COVERED FOAM SUBSTRATE OF A SEAT ASSEMBLY**
EIN FORMWERKZEUG UND VERFAHREN ZUM FORMEN EINER BESCHICHTETEN SCHAUMGRUNDLAGE EINER SITZEINRICHTUNG
OUTIL DE MOULAGE ET PROCEDE DE FACONNAGE D'UN SUBSTRAT EN MOUSSE RECOUVERT D'UNE GARNITURE DE SIEGE

(30) Priority: 12.10.1999 US 158955 P
(43) Date of publication of application: 10.07.2002
(73) Proprietor: Magna Seating Systems Inc., Aurora, Ontario L4G 7K1 (CA)
(72) Inventor: DEMOE, Larry, F., Harrow, Ontario N0R 1G0 (CA); FLEUCHAUS, Kurt, Belle River, Ontario N0R 1A0 (CA); KRESIN, Jens, Belle River, Ontario N0R 1A0 (CA)
(74) Representative: Hössle Kudlek & Partner
(86) International application number: CA0001161
(87) International publication number: WO01026883

(56) References cited:
- EP-A- 0 569 846
- DE-A- 19 754 180
- FR-A- 2 204 116
- FR-A- 2 381 618
- PATENT ABSTRACTS OF JAPAN vol. 013, no. 204 (M-825), 15 May 1989 (1989-05-15) & JP 01 026413 A (KASAI KOGYO CO LTD), 27 January 1989 (1989-01-27)

## Description

### BACKGROUND OF THE INVENTION

### 1) Field of the Invention

The subject invention relates to a mold tool for forming a trim covered foam substrate of a seat assembly.

### 2) Detailed Description of the Related Art

A vehicle seat is typically formed from a molded urethane foam substrate that is surrounded by a decorative trim cover. As disclosed in the closest prior art document FR-A- 2 204116, the manufacturing method includes securing the cover to an upper cast of a mold tool and spraying liquid urethane foam into a lower cast of a mold tool. The cover includes a skirt that protrudes through a split line between the first cast and the second cast when the two casts are in mating engagement. The split line, and heat generated in the mold tool by heating lines, and by the exothermic urethane crosslinking reaction, disfigure the portion of the trim cover within the split line. The trim cover must be restored by the supplementary step of steaming the cover. However, often the cover can not be restored, particularly for less expensive, lower quality covers.

Therefore, it is desirable to provide a mold tool and method that does not cause disfiguring damage to the trim cover and will improve manufacturing cycle time and enable the use of less expensive, lower quality covers.

### SUMMARY OF THE INVENTION

The subject invention relates to a mold tool for forming a trim covered foam substrate of a seat assembly. The mold tool comprises an upper mold cast defining an upper mold surface and a lower mold cast defining a lower mold surface. A split line is defined adjacent to the upper and lower mold surfaces between the upper mold cast and the lower mold cast when the mold casts are in facing mating engagement forming a mold cavity therebetween. A plurality of heat lines extend through at least one of the upper and lower mold casts adjacent the respective upper and lower mold surfaces for heating the mold cavity. A cooling line extends through at least one of the upper and lower mold casts adjacent the split line for cooling the split line of the mold tool.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a vehicle seat;
Figure 2 is a cross-sectional view of a vehicle scat mold tool having an upper cast and a lower cast; and
Figure 3 is a perspective view of the lower cast of the mold tool.

### DETAILED DESCRIPTION OF THE PREFERRED EMBODIMENT

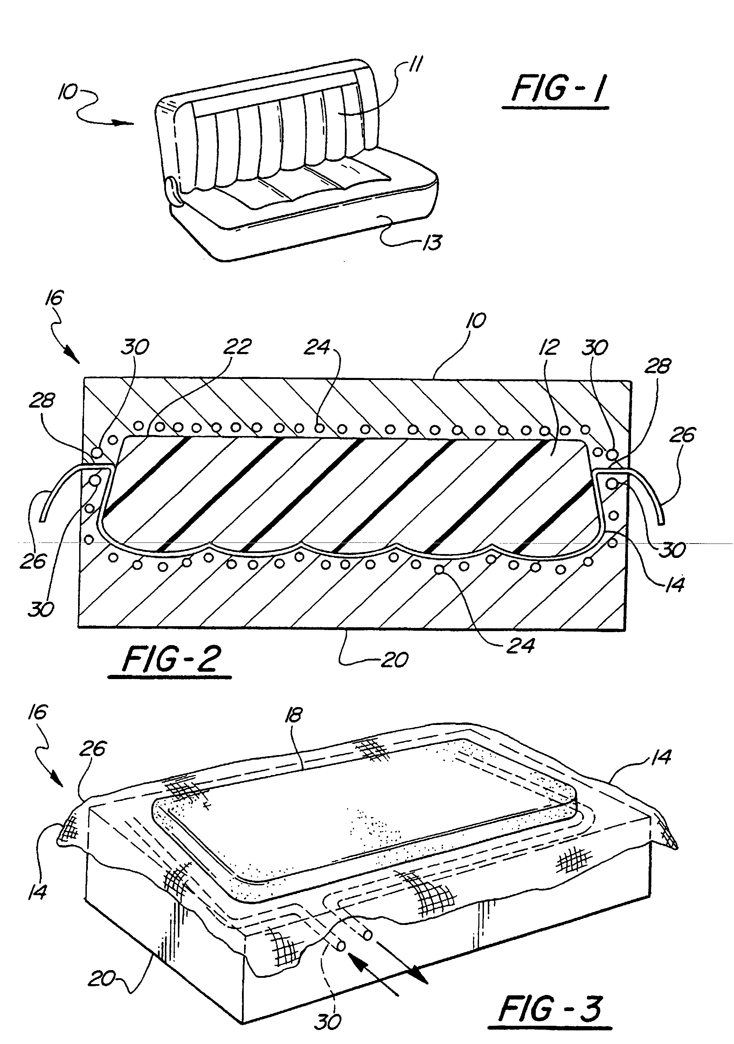

Referring to the Figures, wherein like numerals indicate like or corresponding parts throughout the several views, a vehicle seat is generally shown at 10 in Figure 1. The vehicle seat 10 includes a seat back 11 and a seat cushion 13, which are typically formed from a molded urethane foam substrate 12 that is surrounded by a decorative trim cover 14, The trim cover 14 may comprise a woven fabric, a non-woven fabric, leather. vinyl, or a combination thereof.

Referring to Figures 2 and 3, the method for manufacturing the vehicle seat 10 includes a clam style mold tool 16 having an upper cast 18 defining an upper mold surface 19 and a lower cast 20 defining a lower mold surface 21. When in mating engagement, the upper cast 18 and the lower cast 20 form a cavity 22 therebetween wherein the urethane molding takes place.

A mold release agent, as is commonly known to one skilled in the art, is sprayed into the cavity 22 and onto the lower mold surface 21 prior to introducing liquid urethane into the cavity 22 for preventing the urethane from sticking to the lower mold surface 21 of the mold tool 16 as it cures. Subsequent to applying the mold release agent, the trim cover 14 is placed into the open mold 10 either by affixing the cover 14 to the upper cast 18 via a fastener, by vacuum pressure, or by laying the trim cover 14 into the lower cast 20. The trim cover 14 includes a thermally activated adhesive, as known to one skilled in the art, for affixing the cover 14 to the urethane substrate 12. Additionally, the mold release agent is often thermally activated. There are a plurality of heat lines 24 running through the mold tool 16 adjacent the upper 19 and lower 21 mold surfaces of the cavity 22 for providing heat to the cavity 22. The urethane cross-linking reaction is an exothermic reaction, which also provides heat to the mold tool 16.

As best shown in Figures 2 and 3, the trim cover 14 includes a skirt 26 defined by a portion of the outer periphery of the cover 14 that extends out of the cavity 22 when the upper and lower casts 18,20 are in mating engagement. The outer periphery of the upper 19 and lower 21 mold surfaces of the upper 18 and lower 20 casts define a split line 28 when in mating engagement having the skirt 26 of the trim cover 14 disposed therebetween. The split line 28 is generally 7 mm wide.

After the molding process, the upper cast 18 is removed. The skirt 26 is then wrapped around the cured urethane substrate 12 and affixed to a back surface thereof. The cover 14 may include a textured outer surface, such as a flocking surface, which may become disfigured by the split line 28 leaving a depression in the cover 14. Due to the heat generated in the mold 10 from the exothermic reaction of the urethane and from the heat lines 24, the depression may become a permanent disfigurement in the trim cover 14. Thus, an additional manufacturing step of steaming the cover 14 is required to restore the flocking. However, less expensive, lower quality covers 14 remain disfigured, even after the steaming step, reducing the feasibility of using these types of covers 14.

The subject invention, therefore, includes a cooling line 30 in the lower cast 20 adjacent the split line 28 for cooling the split line 28 and preventing the skirt 26 of the trim cover 14 disposed therein from being heated. The absence of heat at the split line 28 eliminates any amount of disfigurement to the outer surface of the trim cover 14 and eliminates the need for the step of steaming the cover for restoring proper texture. Additionally, cooling the split line 28 reduces disfigurement to the less expensive, lower quality covers 14 allowing for increased usage of these covers. An additional cooling line 30 can be placed in the upper cast 18 adjacent the split line 28 for providing further cooling as shown in Figure 2. The cooling lines 30 are generally 15 mm from the split line and lower the temperature of the split line 28 by approximately 10 °C from the overall mold 10 temperature.

Accordingly, the method for manufacturing the vehicle seat 10 includes the first step of spraying a mold release agent into the mold tool cavity 22 and onto the lower mold surface 21. The second step includes securing the trim cover 14 onto the upper cast with hook and loop fasteners, clamps, vacuum pressure, or an equivalent. The third step is spraying liquid urethane into the cavity 22. The fourth step includes moving the upper cast 18 into mating engagement with the lower cast 20 such that a the skirt portion 26 of the trim cover 14 is secured therebetween in the area defined as the split line 28. The fifth step is simultaneously cooling the split line 28 between the upper and lower casts 18,20 through the cooling line 30 and heating the upper and lower casts 18,20 through the heat lines 24. The trim cover 14 is bonded to the urethane substrate 12 and then the sixth step is removing the cured trim covered urethane foam substrate 12 from the cavity 22.

The cooling of the split line 28 is preferably accomplished by circulating cooling fluid, such as cool water, through the cooling line 30 in the upper 18 and/or lower 20 mold cast. The cooling could also be accomplished by other means such as cool air. The heating of the mold tool 16 is preferably and typically accomplished by circulating heated fluid, such as hot water, hot air, or steam, through the heat lines 24 in the mold casts 18, 20.

The invention has been described in an illustrative manner, and it is to be understood that the terminology which has been used is intended to be in the nature of words of description rather than of limitation.

Many modifications and variations of the present invention are possible in light of the above teachings. It is, therefore, to be understood that the invention may be practiced otherwise than as specifically described, without departing from the scope of the appended claims.

## Claims

1. A mold tool (16) for forming a trim covered foam substrate (12) of a seat assembly (10) comprising:
an upper mold cast (18) defining an upper mold surface (19),
a lower mold cast (20) defining a lower mold surface (21);
a split line (28) defined adjacent to said upper and lower mold surfaces (19, 21) between said upper mold cast (18) and said lower mold cast (20) when said mold casts are in facing mating engagement forming a mold cavity (22) therebetween;
a plurality of heat lines (24) extending through at least one of said upper and lower mold casts (18, 20) adjacent said respective upper and lower mold surfaces (19,21) for heating said mold cavity (22), and
a cooling line (30) extending through at least one of said upper and lower mold casts (18, 20) adjacent said split line (28) for cooling said split line of said mold tool.

2. A method of forming a trim covered foam substrate (12) of a seat assembly (10) comprising the steps of:
providing an mold tool (16) having an upper mold cast (18) defining an upper mold surface (19) and a lower mold cast (20) defining a lower mold surface (21);
securing a trim cover (14) onto the upper mold surface (19);
spraying urethane foam onto the lower mold surface (21);
moving the upper mold cast (18) into facing mating engagement with the lower mold cast (20) to define a mold cavity (22) therebetween;
extending a skirt portion (26) of the trim cover (14) through a split line (28) defined adjacent to the upper and lower mold surface (19,21) and between the upper and lower mold cast (18,20);
heating the mold cavity (22) by circulating heated fluid through a plurality of heat lines (24) within the upper and lower mold casts (18,20) adjacent the respective upper and lower mold surfaces (19,21).
cooling the split line (28) by circulating cooling fluid through a cooling line (30) within one of the upper and lower mold cast (18,20) adjacent the split line (28); and
curing the urethane foam to bond the trim cover (14) thereto within the mold cavity (22).

## Patentansprüche

1. Formwerkzeug (16) zum Formen eines mit einem Bezug überzogenen Schaumstoffsubstrats (12) einer Sitzanordnung (10), mit:
einer oberen Gießform (18), die eine obere Formfläche (19) definiert,
einer unteren Gießform (20), die eine untere Formfläche (21) definiert,
einer Trennlinie (28), die angrenzend an die obere und an die untere Formfläche (19, 21) zwischen der oberen Gießform (18) und der unteren Gießform (20) definiert ist, wenn die Gießformen in einem einander zugewandten Paßeingriff sind und zwischen sich einen Formhohlraum (22) bilden,
einer Mehrzahl von Heizleitungen (24), die sich angrenzend an die obere bzw. die untere Formfläche (19, 21) durch die obere Gießform (18) und/oder durch die untere Gießform (20) erstrecken, um den Formhohlraum (22) zu heizen, und
einer Kühlleitung (30), die angrenzend an die Trennlinie (28) durch die obere Gießform (18) und/oder durch die untere Gießform (20) verläuft, um die Trennlinie des Formwerkzeugs zu kühlen.

2. Verfahren zum Formen eines mit einem Bezug überzogenen Schaumstoffsubstrats (12) einer Sitzanordnung (10), das die folgenden Schritte umfaßt:
Vorsehen eines Formwerkzeugs (16), mit einer oberen Gießform (18), die eine obere Formfläche (19) definiert, und mit einer unteren Gießform (20), die eine untere Formfläche (21) definiert,
Befestigen eines Bezugs (14) an der oberen Formfläche (19),
Sprühen eines Urethanschaums auf die untere Formfläche (21),
Bewegen der oberen Gießform (18) in einen zugewandten Paßeingriff mit der unteren Gießform (20), um dazwischen einen Formhohlraum (22) zu definieren,
Spannen eines Einfassungsabschnitts (26) des Bezugs (14) durch eine Trennlinie (28), die angrenzend an die obere Formfläche (19) und die untere Formfläche (21) und zwischen der oberen und der unteren Gießform (18, 20) definiert ist,
Heizen des Formhohlraums (22) durch Zirkulierenlassen eines erhitzten Fluids durch eine Mehrzahl von an die obere bzw. an die untere Formfläche (19, 21) angrenzenden Heizleitungen (24) in der oberen Gießform (18) und in der unteren Gießform (20),
Kühlen der Trennlinie (28) durch Zirkulierenlassen von Kühlfluid durch eine an die Trennlinie (28) angrenzende Kühlleitung (30) in der oberen Gießform (18) oder in der unteren Gießform (20), und
Härten des Urethanschaums zum Verbinden des Bezugs (14) mit dem Urethanschaum in dem Formhohlraum (22).

## Revendications

1. Outil de moulage (16) pour former un substrat en mousse (12) couvert d'un habillage destiné à un ensemble de siège (10), comprenant:
un élément de moule supérieur (18) définissant une surface de moule supérieure (19),
un élément de moule inférieur (20) définissant une surface de moule inférieure (21),
une ligne de subdivision (28) définie en position adjacente à ladite surface de moule supérieure et à ladite surface de moule inférieure (19, 21) entre ledit élément de moule supérieur (18) et ledit élément de moule inférieur (20) lorsque lesdits éléments de moules sont en engagement d'accouplement face à face en formant entre eux une cavité de moule (22),
une pluralité de lignes de chauffage (24) s'étendant à travers l'un au moins dudit élément de moule supérieur (18) et dudit élément de moule inférieur (20) en position adjacente à la surface respective parmi la surface de moule supérieure (19) et la surface de moule inférieure (21) afin de chauffer ladite cavité de moulage (22), et
une ligne de refroidissement (30) s'étendant à travers l'un au moins dudit élément de moule supérieur (18) et dudit élément de moule inférieur (20) en position adjacente à ladite ligne de subdivision (28) afin de refroidir ladite ligne de subdivision dudit outil de moulage.

2. Procédé pour former un substrat en mousse (12) couvert d'un habillage destiné à un ensemble de siège (10), comprenant les étapes consistant à:
procurer un outil de moulage (16) ayant un élément de moule supérieur (18) définissant une surface de moule supérieure (19) et un élément de moule inférieur (20) définissant une surface de moule inférieure (21),
attacher une couverture d'habillage (14) sur la surface de moule supérieure (19),
pulvériser de la mousse d'uréthane sur la surface de moule inférieure (21),
déplacer l'élément de moule supérieur (18) jusqu'en engagement d'accouplement face à face avec l'élément de moule inférieur (20) pour définir entre eux une cavité de moule (22),
laisser une partie de jupe (26) de la couverture d'habillage (14) s'étendre à travers une ligne de subdivision (28) définie en position adjacente à la surface de moule supérieure (19) et à la surface de moule inférieure (21) entre l'élément de moule supérieur (18) et l'élément de moule inférieur (20),
chauffer la cavité de moule (22) en faisant circuler un fluide chauffé à travers une pluralité de lignes de chauffage (24) à l'intérieur de l'élément de moule supérieur (18) et de l'élément de moule inférieur (20) en position adjacente à la surface respective parmi la surface de moule supérieure (19) et la surface de moule inférieure (21),
refroidir la ligne de subdivision (28) en faisant circuler un fluide de refroidissement à travers une ligne de refroidissement (30) dans l'un parmi l'élément de moule supérieur (18) et l'élément de moule inférieur (20) en position adjacente à la ligne de subdivision (28), et
laisser durcir la mousse d'uréthane pour faire adhérer la couverture d'habillage (14) sur celle-ci à l'intérieur de la cavité de moule (22).
